# DEMANDE DE BREVET EUROPEEN

(11) **EP 4 559 309 A1**
(43) Date de publication de la demande: **28.05.2025**
(21) Numéro de dépôt: 24214624.9
(22) Date de dépôt: 21.11.2024
(51) Int. Cl.: A01G 9/02, A01G 9/24

(54) **MUR VÉGÉTAL ÉQUIPÉ D'UN SYSTÈME DE CHAUFFAGE ET DE REFROIDISSEMENT**

(30) Priorité: 24.11.2023 FR 2313021
(71) Demandeur: Peleszezak, Pascal, 69550 Amplepuis (FR)
(72) Inventeur: Peleszezak, Pascal, 69550 Amplepuis (FR)
(74) Mandataire: Germain Maureau

(57) **Abrégé**

Le mur végétal comprend une structure de mur (3) délimitant un volume interne (6) configuré pour recevoir un substrat de plantation (SU), la structure de mur (3) comprenant une pluralité d'ouvertures de passage (8) débouchant dans au moins des première et deuxième faces externes (4.1, 5.1) de la structure de mur (3) et configurées pour permettre l'expansion de végétaux, plantés dans le substrat de plantation (SU), hors de la structure de mur (3) ; un système d'irrigation configuré pour irriguer le substrat de plantation (SU) ; et un système de chauffage et de refroidissement (19) configuré pour fonctionner selon un mode de refroidissement dans lequel le système de chauffage et de refroidissement (19) est configuré pour réchauffer la structure de mur (3) et un mode de chauffage dans lequel le système de chauffage et de refroidissement (19) est configuré pour refroidir la structure de mur (3).

## Description

### Domaine technique

La présente invention concerne un mur végétal destiné notamment à être utilisé en milieu urbain.

### Etat de la technique

Un mur végétal est susceptible d'être utilisé en milieu urbain notamment pour des raisons esthétiques (par exemple pour contribuer à un embellissement urbain ou dissimuler des murs disgracieux en pierre ou en béton), ou pour des raisons de dépollution de l'air ambiant, notamment en transformant le dioxyde de carbone de l'air ambiant par photosynthèse.

Un mur végétal peut également être utilisé dans l'agriculture verticale afin d'assurer une production accrue, pour une même surface au sol, par rapport à l'agriculture horizontale.

Un mur végétal comprend de façon connue :
- une structure de mur délimitant un volume interne configuré pour recevoir un substrat de plantation, tel que du terreau, dans lequel sont destinés à être plantés des végétaux, tels que des fruits et des légumes, la structure de mur comprenant une première face externe et une deuxième face externe qui sont situées à l'opposé l'une de l'autre, et une pluralité d'ouvertures de passage qui débouchent dans au moins l'une des première et deuxième faces externes et qui sont configurées pour permettre l'expansion de végétaux, plantés dans le substrat de plantation, hors de la structure de mur, et
- un système d'irrigation configuré pour irriguer le substrat de plantation.

Cependant, en cas de fortes chaleurs en période estivale, le feuillage des plantes du mur végétal peut ne pas être suffisant pour assurer un rafraîchissement optimal du substrat de plantation, et donc des racines des plantes présentes dans substrat de plantation, ce qui peut conduire à un arrêt du cycle végétal d'au moins certaines des plantes du mur végétal, voire au dessèchement ou à la mort de ces dernières. Il en résulte que l'embellissement procuré par le mur végétal est susceptible d'être fortement réduit en période estivale, de même que la production de légumes ou de fruits au sein du mur végétal.

De façon similaire, l'embellissement procuré par un mur végétal et la production de fruits et/ou légume au sein d'un mur végétal sont relativement faibles à la fin de l'automne et au début du printemps.

### Résumé de l'invention

La présente invention vise à remédier à ces inconvénients.

Le problème technique à la base de l'invention consiste donc à fournir un mur végétal qui soit de structure simple et économique, tout en conférant une durée d'embellissement et/ou une production de végétaux accrues au cours d'une année.

A cet effet, la présente invention concerne un mur végétal comprenant :
- une structure de mur délimitant un volume interne configuré pour recevoir un substrat de plantation, tel que du terreau, de la tourbe, du gravier ou autre, dans lequel sont destinés à être plantés des végétaux, tels que des fruits et des légumes, la structure de mur comprenant une première face externe et une deuxième face externe qui sont situées à l'opposé l'une de l'autre, et une pluralité d'ouvertures de passage qui débouchent dans au moins l'une des première et deuxième faces externes et qui sont configurées pour permettre l'expansion de végétaux, plantés dans le substrat de plantation, hors de la structure de mur, et
- un système d'irrigation configuré pour irriguer le substrat de plantation,
caractérisé en ce que le mur végétal comporte en outre un système de chauffage et de refroidissement configuré pour fonctionner selon au moins un mode de refroidissement dans lequel le système de chauffage et de refroidissement est configuré pour réchauffer la structure de mur, et donc le substrat de plantation reçu dans le volume interne, et un mode de chauffage dans lequel le système de chauffage et de refroidissement est configuré pour refroidir la structure de mur, et donc le substrat de plantation reçu dans le volume interne, et une unité de commande configurée pour commander le fonctionnement du système de chauffage et de refroidissement selon le mode de refroidissement ou le mode de chauffage.

Une telle configuration du mur végétal selon la présente invention, et en particulier la présence du système de chauffage et de refroidissement, permet, en période froide, de réchauffer le substrat de plantation, et donc d'éviter notamment le gel des végétaux plantés dans le mur végétal, et, en période chaude, de rafraîchir le substrat de plantation et d'éviter une évapotranspiration trop importante du substrat de plantation (qui pourrait conduire à un dessèchement des végétaux plantés dans le mur végétal), et donc de préserver l'intégrité de ces végétaux et notamment de leurs feuillages.

Par conséquent, la présence du système de chauffage et de refroidissement permet d'accroître sensiblement la durée d'embellissement procurée par le mur végétal selon la présente invention au cours d'une année.

Dans le cadre d'une utilisation du mur végétal selon la présente invention pour de l'agriculture verticale, la présence du système de chauffage et de refroidissement permet d'avoir une production plus précoce en maintenant les végétaux plantés dans le mur végétal en situation de « hors gel » au printemps, et une production abondante en été en assurant un rafraîchissant des végétaux plantés dans le mur végétal, et de prolonger la production à l'automne en réchauffant les végétaux plantés dans le mur végétal.

Il en résulte que le mur végétal selon la présente invention assure une production de végétaux accrue au cours d'une année.

Enfin, lorsqu'un mur végétal selon la présente invention est positionné contre un mur d'un bâtiment, telle qu'une façade d'un immeuble ou d'une habitation, il permet également de réchauffer le bâtiment en période froide et de le rafraîchir en période chaude. Ainsi, le mur végétal selon la présente invention peut remplacer, ou du moins compléter, les isolations classiques dont peut être pourvu un mur d'un bâtiment.

Le mur végétal selon la présente invention peut en outre présenter une ou plusieurs des caractéristiques suivantes, prises seules ou en combinaison.

Selon un mode de réalisation de l'invention, la structure de mur est autoporteuse.

Selon un mode de réalisation de l'invention, le volume interne s'étend sur sensiblement toute la hauteur de la structure de mur.

Selon un mode de réalisation de l'invention, la structure de mur comprend plusieurs rangées d'ouvertures de passage qui sont décalées verticalement les unes des autres. De façon avantageuse, les ouvertures de passage appartenant à une même rangée sont sensiblement alignées horizontalement.

Selon un mode de réalisation de l'invention, la structure de mur comporte une première paroi structurelle comprenant la première face externe et une deuxième paroi structurelle comprenant la deuxième face externe, les première et deuxième parois structurelles étant espacées l'une de l'autre et délimitant entre elles le volume interne configuré pour recevoir le substrat de plantation, au moins l'une des première et deuxième parois structurelles étant ajourée et comprenant des ouvertures de passage appartenant à ladite pluralité d'ouvertures de passage.

Selon un mode de réalisation de l'invention, chacune des première et deuxième parois structurelles est configurée pour s'étendre sensiblement verticalement.

Selon un mode de réalisation de l'invention, chacune des première et deuxième parois structurelles est sensiblement plane.

Selon un mode de réalisation de l'invention, chacune des première et deuxième parois structurelles est ajourée et comprend des ouvertures de passage configurées pour permettre l'expansion de végétaux, plantés dans le substrat de plantation, hors de la structure de mur. Ainsi, le mur végétal selon la présente invention permet la plantation de végétaux des deux côtés du mur végétal.

Selon un mode de réalisation de l'invention, la structure de mur comporte des entretoises de liaison configurées pour relier entre elles les première et deuxième parois structurelles.

Selon un mode de réalisation de l'invention, au moins l'une des première et deuxième parois structurelles, et par exemple chacune des première et deuxième parois structurelles, est en béton de ciment, et par exemple en béton réfractaire.

Selon un mode de réalisation de l'invention, le système de chauffage et de refroidissement est une pompe à chaleur réversible, telle qu'une pompe à chaleur aérothermique.

Selon un mode de réalisation de l'invention, le système de chauffage et de refroidissement comporte au moins un circuit de circulation de fluide caloporteur comprenant au moins un échangeur thermique interne couplé thermiquement à la structure de mur, c'est-à-dire configuré pour échanger de l'énergie thermique, à savoir des calories, avec la structure de mur, et configuré pour être traversé par un fluide caloporteur, également nommé fluide frigorigène.

Selon un mode de réalisation de l'invention, l'au moins un échangeur thermique interne, qui est couplé thermiquement à la structure de mur, est configuré pour former un condenseur lorsque le système de chauffage et de refroidissement est dans le mode de chauffage, et est configuré pour former un évaporateur lorsque le système de chauffage et de refroidissement est dans le mode de refroidissement.

Selon un mode de réalisation de l'invention, le circuit de circulation de fluide caloporteur comporte en outre un échangeur thermique externe, un compresseur et un détendeur. De façon avantageuse, le système de chauffage et de refroidissement comporte une unité extérieure située à l'extérieur de la structure de mur et logeant l'échangeur thermique externe, le compresseur et le détendeur.

Selon un mode de réalisation de l'invention, l'échangeur thermique externe est configuré pour former un évaporateur lorsque le système de chauffage et de refroidissement est dans le mode de chauffage, et est configuré pour former un condenseur lorsque le système de chauffage et de refroidissement est dans le mode de refroidissement.

Selon un mode de réalisation de l'invention, le circuit de circulation de fluide caloporteur comporte une première portion de circuit comprenant le détendeur, l'échangeur thermique externe et le compresseur, et au moins une deuxième portion de circuit qui est reliée fluidiquement à la première portion de circuit et qui comprend l'au moins un échangeur thermique interne.

Selon un mode de réalisation de l'invention, l'au moins un échangeur thermique interne, qui est couplé thermiquement à la structure de mur, est fixé à l'une des première et deuxième parois structurelles.

Selon un mode de réalisation de l'invention, l'au moins un échangeur thermique interne, qui est couplé thermiquement à la structure de mur, est au moins en partie intégré, c'est-à-dire noyé, dans le béton de ciment formant l'une des première et deuxième parois structurelles.

Selon un mode de réalisation de l'invention, l'au moins un échangeur thermique interne, qui est couplé thermiquement à la structure de mur, est disposé au moins en partie dans le volume interne et s'étend au moins en partie en regard d'une face interne de l'une des première et deuxième parois structurelles.

Selon un mode de réalisation de l'invention, le circuit de circulation de fluide caloporteur comporte une pluralité d'échangeurs thermiques internes qui sont couplés thermiquement à différentes parties de la structure de mur et qui sont configurés pour être traversés par un fluide caloporteur.

Selon un mode de réalisation de l'invention, le circuit de circulation de fluide caloporteur comporte une pluralité de deuxièmes portions de circuit reliées fluidiquement à la première portion de circuit, chaque deuxième portion de circuit comprenant un échangeur thermique interne respectif de ladite pluralité d'échangeurs thermiques internes.

Selon un mode de réalisation de l'invention, la pluralité d'échangeurs thermiques internes comporte au moins un échangeur thermique inférieur qui s'étend dans une partie inférieure de la structure de mur et qui est couplé thermiquement à la partie inférieure de la structure de mur, et au moins un échangeur thermique supérieur qui s'étend dans une partie supérieure de la structure de mur et qui est couplé thermiquement à la partie supérieure de la structure de mur.

Selon un mode de réalisation de l'invention, la pluralité d'échangeurs thermiques internes comporte au moins un échangeur thermique intermédiaire qui s'étend dans une partie intermédiaire de la structure de mur, située entre les parties inférieure et supérieure de la structure de mur, et qui est couplé thermiquement à la partie intermédiaire de la structure de mur.

Selon un mode de réalisation de l'invention, la pluralité d'échangeurs thermiques internes comporte un échangeur thermique inférieur au moins en partie intégré, et par exemple intégralement intégré, dans une partie inférieure de l'une des première et deuxième parois structurelles, et par exemple de chacune des première et deuxième parois structurelles, et un échangeur thermique supérieur au moins en partie intégré, et par exemple intégralement intégré, dans une partie supérieure de l'une des première et deuxième parois structurelles, et par exemple de chacune des première et deuxième parois structurelles.

Selon un mode de réalisation de l'invention, la pluralité d'échangeurs thermiques internes comporte un échangeur thermique inférieur s'étendant au moins en partie dans une partie inférieure du volume interne et le long d'une face interne de l'une des première et deuxième parois structurelles, et un échangeur thermique supérieur s'étendant au moins en partie dans une partie supérieure du volume interne et le long d'une face interne de l'une des première et deuxième parois structurelles.

Selon un mode de réalisation de l'invention, l'unité de commande est configurée pour réguler de manière indépendante les températures dans les différentes parties de la structure de mur auxquelles sont couplés thermiquement des échangeurs thermiques internes appartenant à ladite pluralité d'échangeurs thermiques internes. En d'autres termes, l'unité de commande est configurée pour réguler de manière indépendante les températures du fluide caloporteur circulant dans les différents échangeurs thermiques internes appartenant à ladite pluralité d'échangeurs thermiques internes. Ainsi, par exemple en été, il est possible de réguler en température différemment la partie supérieure de la structure de mur qui se retrouve en plein soleil une grande partie de la journée, et la partie inférieure de la structure de mur qui se retrouve à l'ombre une grande partie de la journée, et ce afin de limiter la consommation électrique du mur végétal selon la présente invention.

Selon un mode de réalisation de l'invention, le mur végétal comporte au moins un capteur de température couplé thermiquement à la structure de mur, et l'unité de commande est configurée pour commander le fonctionnement du système de chauffage et de refroidissement en fonction de la température mesurée par l'au moins un capteur de température.

Selon un mode de réalisation de l'invention, le mur végétal est préfabriqué ou est érigé sur site.

Selon un mode de réalisation de l'invention, le système d'irrigation comporte au moins une colonne d'alimentation en eau qui est disposée dans le volume interne délimité par la structure de mur, et des tubulures d'irrigation reliées fluidiquement à l'au moins une colonne d'alimentation en eau et configurées pour s'étendre sensiblement horizontalement.

Selon un mode de réalisation de l'invention, les tubulures d'irrigation sont disposées à l'extérieur du volume interne délimité par la structure de mur.

Selon un mode de réalisation de l'invention, le mur végétal comporte des organes de support fixés à la structure de mur et configurés pour supporter les tubulures d'irrigation et pour positionner les tubulures d'irrigation à distance du substrat de plantation.

Selon un mode de réalisation de l'invention, chaque organe de support comporte une encoche de retenue configurée pour recevoir et retenir un tronçon respectif d'une tubulure d'irrigation respective.

Selon un mode de réalisation de l'invention, le mur végétal comporte des réceptacles de plantation, tels que des bacs de plantation, fixés à la structure de mur et s'étendant le long d'au moins l'une des première et deuxième faces externes de la structure de mur, chaque réceptacle de plantation délimitant une cavité de réception configurée pour recevoir du substrat de plantation, chaque cavité de réception étant ouverte vers le haut et communiquant avec le volume interne délimité par la structure de mur par l'intermédiaire d'au moins une ouverture de passage prévue sur la structure de mur. Ainsi, le substrat de plantation contenu à l'intérieur du volume interne et le substrat de plantation contenu dans les cavités de réception ne forment qu'une masse continue de substrat. De plus, de telles cavités de réception autorisent la plantation de végétaux dans le substrat de plantation, et le développement de ces végétaux vers l'extérieur de la structure de mur. Elles permettent aussi le rajout de substrat de plantation dans le volume interne.

Selon un mode de réalisation de l'invention, le mur végétal comporte une première série de réceptacles de plantation s'étendant le long de la première face externe de la structure de mur, et une deuxième série de réceptacles de plantation s'étendant le long de la deuxième face externe de la structure de mur.

Selon un mode de réalisation de l'invention, chaque réceptacle de plantation est fixé à l'une des première et deuxième parois structurelles.

Selon un mode de réalisation de l'invention, chaque réceptacle de plantation s'étend sensiblement horizontalement.

Selon un mode de réalisation de l'invention, le mur végétal comporte au moins un réceptacle de plantation associé à chaque rangée d'ouvertures de passage.

Selon un mode de réalisation de l'invention, chaque réceptacle de plantation comporte une paroi frontale qui est inclinée par rapport à la verticale et qui est pourvue d'un bord longitudinal inférieur s'étendant sensiblement horizontalement et à proximité ou au contact d'une face externe respective parmi les première et deuxième faces externes de la structure de mur, et d'un bord longitudinal supérieur s'étendant sensiblement horizontalement et à distance de ladite face externe.

Selon un mode de réalisation de l'invention, les réceptacles de plantation sont configurés pour guider l'expansion de végétaux, plantés dans le substrat de plantation, vers l'extérieur de la structure de mur.

Selon un mode de réalisation de l'invention, chaque réceptacle de plantation est fixé de manière amovible à la structure de mur.

Selon un mode de réalisation de l'invention, chaque réceptacle de plantation comporte des organes de fixation configurés pour être fixés de manière amovible à la structure de mur, et par exemple pour fixer de manière amovible la paroi frontale respective à la structure de mur. De façon avantageuse, chaque organe de fixation comporte une partie de support formant un organe de support configuré pour supporter un tronçon respectif d'une tubulure d'irrigation respective.

Selon un mode de réalisation de l'invention, chaque tubulure d'irrigation s'étend au-dessus d'au moins une cavité de réception, et est donc configurée pour irriguer le substrat de plantation contenu dans l'au moins une cavité de réception respective.

Selon un mode de réalisation de l'invention, le mur végétal comporte au moins un panneau photovoltaïque, par exemple situé au sommet de la structure de mur.

Selon un mode de réalisation de l'invention, l'unité de commande et le système de chauffage et de refroidissement sont configurés pour être alimentés électriquement au moins en partie avec de l'énergie électrique produite par l'au moins un panneau photovoltaïque.

Selon un mode de réalisation de l'invention, le mur végétal comporte une pluralité de parois de retenue de substrat disposées dans le volume interne et fixées à la structure de mur, chaque paroi de retenue de substrat étant configurée pour former une étagère de retenue apte à retenir une partie respective du substrat de plantation reçu dans le volume interne délimité par la structure de mur.

### Brève description des figures

La présente invention sera bien comprise à l'aide de la description qui suit en référence aux figures annexées, dans lesquelles des signes de références identiques correspondent à des éléments structurellement et/ou fonctionnellement identiques ou similaires.
Figure 1 est une vue partielle en perspective d'un mur végétal selon un premier mode de réalisation de l'invention.
Figure 2 est une vue à l'échelle agrandie d'un détail de la figure 1.
Figure 3 est une vue en coupe transversale du mur végétal de la figure 1.
Figure 4 est une vue à l'échelle agrandie d'un détail de la figure 3.
Figure 5 est une vue schématique d'un circuit de circulation de fluide caloporteur appartenant à un système de chauffage et de refroidissement dont est équipé le mur végétal de la figure 1.
Figure 6 est une vue partielle en coupe transversale d'un mur végétal selon un deuxième mode de réalisation de l'invention.

### Description détaillée

A défaut de stipulation contraire, le terme « sensiblement » signifie, dans le présent document, « exactement ou à 10% ou à 10° près ».

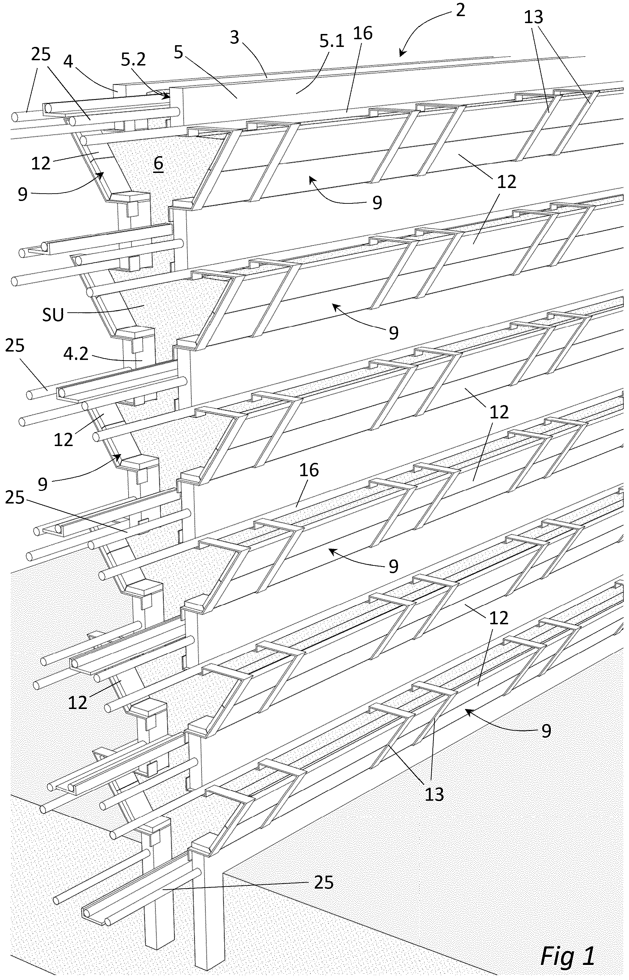

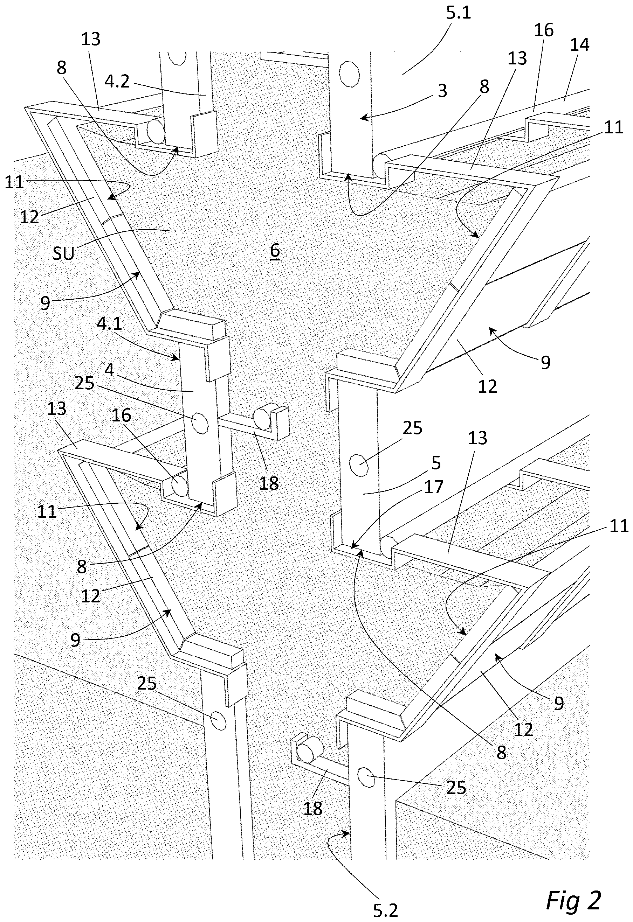

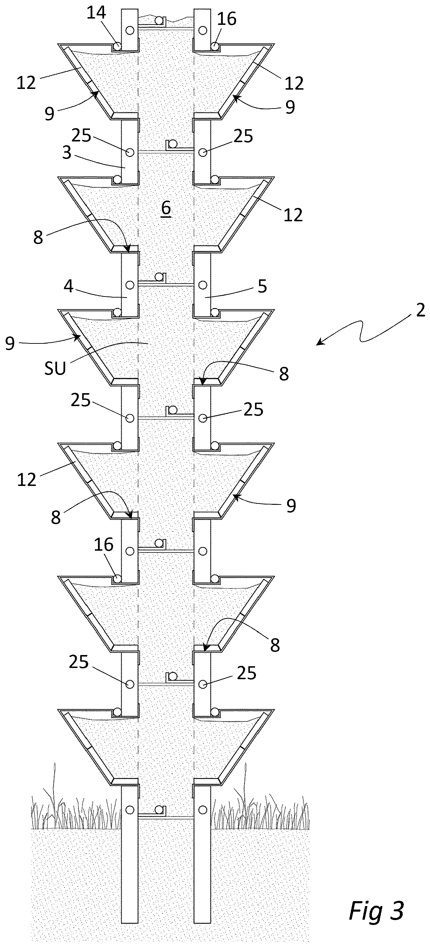

Les figures 1 à 5 représentent un mur végétal 2 comprenant notamment une structure de mur 3 qui est autoporteuse et qui s'étend selon un plan d'extension.

La structure de mur 3 comporte une première paroi structurelle 4 comprenant une première face externe 4.1 et une première face interne 4.2, et une deuxième paroi structurelle 5 comprenant la deuxième face externe 5.1 et une deuxième face interne 5.2. Les première et deuxième faces externes 4.1, 5.1 sont situées à l'opposé l'une de l'autre et de part et d'autre du plan d'extension de la structure de mur 3, et forment les faces principales de la structure de mur 3.

Selon le mode de réalisation représentée sur les figures 1 à 5, chacune des première et deuxième parois structurelles 4, 5 est sensiblement plane, et est configurée pour s'étendre sensiblement verticalement. Cependant, selon une variante de réalisation de l'invention, chacune des première et deuxième parois structurelles 4, 5 pourrait être légèrement inclinée par rapport à la verticale, et les première et deuxième parois structurelles 4, 5 pourraient converger en direction du plan d'extension de la structure de mur 3.

Chacune des première et deuxième parois structurelles 4, 5 peut par exemple être réalisée en béton de ciment, et notamment en béton réfractaire. Toutefois, les première et deuxième parois structurelles 4, 5 pourraient être réalisées en d'autres matériaux, et par exemple en bois.

Les première et deuxième parois structurelles 4, 5 sont espacées l'une de l'autre et délimitent entre elles un volume interne 6 configuré pour recevoir un substrat de plantation SU, tel que du terreau, de la terre végétale, de la tourbe, du gravier ou autre, dans lequel sont destinés à être plantés des végétaux, tels que des plantes, des fruits et/ou des légumes. De façon avantageuse, le volume interne 6 s'étend sur sensiblement toute la hauteur de la structure de mur 3, et peut par exemple déboucher dans une face inférieure de la structure de mur 3 de manière à être directement au contact de la terre lorsque la structure de mur 3 est positionnée à son emplacement final.

Afin d'assurer la stabilité des première et deuxième parois structurelles 4, 5, la structure de mur 3 comporte avantageusement des entretoises de liaison 7 disposées dans le volume interne 6 et reliant entre elles les première et deuxième parois structurelles 4, 5.

Selon le mode de réalisation représentée sur les figures 1 à 5, chacune des première et deuxième parois structurelles 4, 5 est ajourée, et le mur végétal 2 comporte plus particulièrement une première série d'ouvertures de passage 8 prévues sur la première paroi structurelle 4 et débouchant dans la première face externe 4.1 de la première paroi structurelle 4, et une deuxième série d'ouvertures de passage 8 prévues sur la deuxième paroi structurelle 5 et débouchant dans la deuxième face externe 5.1 de la première paroi structurelle 4. Les ouvertures de passage 8 sont plus particulièrement configurées pour permettre l'expansion de végétaux, plantés dans le substrat de plantation SU, hors de la structure de mur 3.

Selon le mode de réalisation représentée sur les figures 1 à 5, la première série d'ouvertures de passage 8 comprend plusieurs rangées d'ouvertures de passage 8 qui sont décalées verticalement les unes des autres, et la deuxième série d'ouvertures de passage comprend plusieurs rangées d'ouvertures de passage 8 qui sont décalées verticalement les unes des autres. De façon avantageuse, les ouvertures de passage 8 appartenant à une même rangée sont sensiblement alignées horizontalement, et chaque ouverture de passage 8 est allongée et s'étend sensiblement horizontalement. Selon une variante de réalisation de l'invention, chacune des première et deuxième séries d'ouvertures de passage 8 pourrait ne comporter qu'une unique colonne d'ouvertures de passage 8 disposées les unes au-dessus des autres.

Chaque ouverture de passage 8 peut par exemple présenter une forme rectangulaire. Cependant, selon une variante de réalisation de l'invention, chaque ouverture de passage 8 pourrait par exemple présenter une forme carrée, circulaire ou encore oblongue.

Selon le mode de réalisation représentée sur les figures 1 à 5, le mur végétal 2 comporte en outre des réceptacles de plantation 9, tels que des bacs de plantation, fixés à la structure de mur 3 et s'étendant sensiblement horizontalement. De façon avantageuse, le mur végétal 2 comporte une première série de réceptacles de plantation 9 s'étendant le long de la première face externe 4.1 de la structure de mur 3, et une deuxième série de réceptacles de plantation 9 s'étendant le long de la deuxième face externe 5.1 de la structure de mur 3.

Chaque réceptacle de plantation 9 délimite une cavité de réception 11 configurée pour recevoir du substrat de plantation SU. De façon avantageuse, chaque cavité de réception 11 est ouverte vers le haut et communique avec le volume interne 6 délimité par la structure de mur 3 par l'intermédiaire d'une ou de plusieurs ouverture(s) de passage 8. Ainsi, le substrat de plantation SU contenu à l'intérieur du volume interne 6 et le substrat de plantation SU contenu dans les cavités de réception 11 ne forment qu'une masse continue de substrat. Les cavités de réception 11 autorisent donc la plantation de végétaux dans le substrat de plantation SU, et le développement de ces végétaux vers l'extérieur de la structure de mur 3. Les cavités de réception 11 permettent aussi le rajout de substrat de plantation SU dans le volume interne 6.

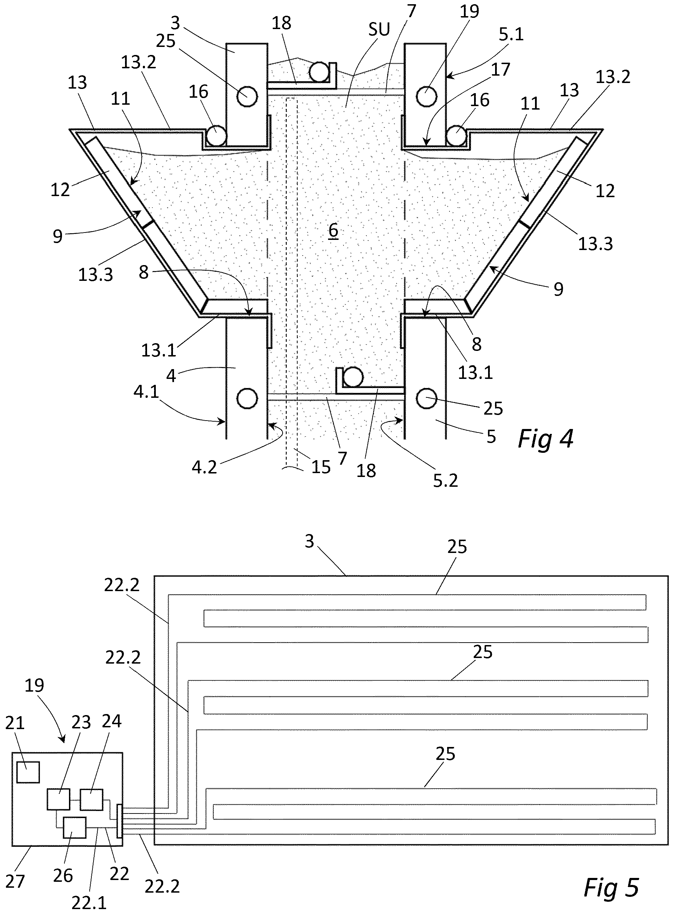

Comme montré sur la figure 4, chaque réceptacle de plantation 9 comporte une paroi frontale 12 qui est inclinée par rapport à la verticale et qui est pourvue d'un bord longitudinal inférieur s'étendant sensiblement horizontalement et au contact d'une face externe respective parmi les première et deuxième faces externes 4.1, 5.1 de la structure de mur 3, et d'un bord longitudinal supérieur s'étendant sensiblement horizontalement et à distance de ladite face externe. Ainsi, les réceptacles de plantation 9 sont configurés pour guider l'expansion de végétaux, plantés dans le substrat de plantation SU, vers l'extérieur de la structure de mur 3. La paroi frontale 12 de chaque réceptacle de plantation 9 peut par exemple être formée par une ou plusieurs planche(s) par exemple en bois.

Selon le mode de réalisation représentée sur les figures 1 à 5, chaque réceptacle de plantation 9 est fixé de manière amovible à la structure de mur 3. Chaque réceptacle de plantation 9 comporte plus particulièrement des organes de fixation 13 configurés pour être fixés de manière amovible à la structure de mur 3, et plus particulièrement pour fixer de manière amovible la paroi frontale 12 respective à la structure de mur 3.

Chaque organe de fixation 13 peut par exemple comporter une branche de fixation inférieure 13.1 et une branche de fixation supérieure 13.2 configurées pour être insérées dans une ouverture de passage 8 respective et pour être fixées à la structure de mur 3, et une partie de retenue 13.3 qui relie la branche de fixation inférieure 13.1 respective et la branche de fixation supérieure 13.2 respective et qui est configurée pour supporter une portion respective de la paroi frontale 12 respective. De façon avantageuse, la branche de fixation inférieure 13.1 et la branche de fixation supérieure 13.2 de chaque organe de fixation 13 sont élastiquement déformables entre une configuration d'insertion dans laquelle la branche de fixation inférieure 13.1 et la branche de fixation supérieure 13.2 sont rapprochées l'une de l'autre et sont aptes à être insérées dans l'ouverture de passage 8 respective, et une configuration de fixation dans laquelle la branche de fixation inférieure 13.1 et la branche de fixation supérieure 13.2 sont éloignées l'une de l'autre et sont aptes à être fixées à la structure de mur 3. La branche de fixation inférieure 13.1 et la branche de fixation supérieure 13.2 de chaque organe de fixation 13 sont plus particulièrement configurées pour être sollicitées élastiquement vers la configuration de fixation lorsqu'elles occupent la configuration d'insertion. Une telle configuration des organes de fixation 13 assure une fixation aisée des réceptacles de plantation 9 à la structure de mur 3.

De façon avantageuse, la branche de fixation inférieure 13.1 et la branche de fixation supérieure 13.2 de chaque organe de support 13 sont configurées pour s'étendre sensiblement horizontalement lorsque ledit chaque organe de fixation 13 est fixé à la structure de mur 3, et pour être plaquées « élastiquement » contre des parois internes délimitant l'ouverture de passage 8 respective, et la partie de retenue 13.3 de chaque organe de support 13 est configurée pour être inclinée par rapport à la verticale de manière à positionner la paroi frontale 12 selon l'inclinaison souhaitée.

Le mur végétal 2 comporte en outre un système d'irrigation 14 configuré pour irriguer le substrat de plantation SU contenu dans le volume interne 6 et dans chacune des cavités de réception 11. Le système d'irrigation 14 comporte notamment au moins une colonne d'alimentation en eau 15 (voir la figure 4) disposée dans le volume interne 6 et configurée pour s'étendre sensiblement verticalement, et des tubulures d'irrigation 16 reliées fluidiquement à la colonne d'alimentation en eau 15 et configurées pour s'étendre sensiblement horizontalement. De façon avantageuse, les tubulures d'irrigation 16 sont disposées à l'extérieur du volume interne 6 délimité par la structure de mur 3, et chaque tubulure d'irrigation 16 est perforée et s'étend au-dessus d'une cavité de réception 11 respective.

Le mur végétal 2 comporte des organes de support fixés à la structure de mur 3 et configurés pour supporter les tubulures d'irrigation 16 et pour positionner les tubulures d'irrigation 16 à distance du substrat de plantation SU contenu dans les cavités de réception 11. Selon le mode de réalisation représentée sur les figures 1 à 5, chaque organe de support comporte une encoche de retenue 17, par exemple sensiblement semi-circulaire ou rectangulaire, configurée pour recevoir et retenir un tronçon respectif d'une tubulure d'irrigation 16 respective. De façon avantageuse, chaque organe de support est formé par un organe de fixation 13 respectif, et chaque encoche de retenue 17 est prévue sur la branche de fixation supérieure 13.2 appartenant à l'organe de fixation 13 respectif.

Le système d'irrigation 14 pourrait en outre comporter une pompe de circulation (non représenté sur les figures) reliée fluidiquement à la colonne d'alimentation en eau 15, et configurée pour alimenter en eau cette dernière.

Le mur végétal 2 pourrait en outre comporter une pluralité de parois de retenue de substrat 18 disposées dans le volume interne 6 et fixées à la structure de mur 3. Chaque paroi de retenue de substrat 18 est plus particulièrement configurée pour former une étagère de retenue apte à retenir une partie respective du substrat de plantation SU reçu dans le volume interne 6 délimité par la structure de mur 3. De façon avantageuse, la pluralité de parois de retenue de substrat 18 comporte plusieurs rangées de parois de retenue de substrat 18 qui sont décalées verticalement les unes des autres, et les parois de retenue de substrat 18 appartenant à une même rangée sont sensiblement alignées horizontalement. Chaque paroi de retenue de substrat 18 est avantageusement perméable, et peut notamment être grillagée, poreuse ou ajourée

Selon le mode de réalisation représenté sur les figures 1 à 5, chaque paroi de retenue de substrat 18 présente des premier et second bords longitudinaux qui sont opposés, et présente une largeur prise entre ses premier et second bords longitudinaux qui est inférieure à la distance de séparation entre les première et deuxième parois structurelles 4, 5, et donc à la largeur du volume interne 6 délimité par la structure de mur 3. De façon avantageuse, l'un des premier et deuxième bords longitudinaux de chaque paroi de retenue de substrat 18 est fixé à l'une des première et deuxième parois structurelles 4, 5, et l'autre des premier et deuxième bords longitudinaux de chaque paroi de retenue de substrat 18 est libre, de sorte que ladite paroi de retenue de substrat 18 s'étend à partir de l'une des première et deuxième parois structurelles 4, 5 sans atteindre l'autre des première et deuxième parois structurelles 4, 5.

Comme montré sur la figure 4, les parois de retenue de substrat 18 sont disposées dans le volume interne 6 de telle sorte que deux parois de retenue de substrat 18 disposées l'une au-dessus de l'autre sont décalées selon une direction transversale qui est orthogonale au plan d'extension de la structure de mur 3.

Le mur végétal 2 comporte en outre un système de chauffage et de refroidissement 19 configuré pour fonctionner selon un mode de refroidissement dans lequel le système de chauffage et de refroidissement 19 est configuré pour réchauffer la structure de mur 3, et donc le substrat de plantation SU reçu dans le volume interne 6, et un mode de chauffage dans lequel le système de chauffage et de refroidissement 19 est configuré pour refroidir la structure de mur 3, et donc le substrat de plantation SU reçu dans le volume interne 6, et une unité de commande 21 configurée pour commander notamment le fonctionnement du système de chauffage et de refroidissement 19 selon le mode de refroidissement ou le mode de chauffage.

La présence d'un tel système de chauffage et de refroidissement 19 permet, en période froide, de réchauffer le substrat de plantation SU, et donc d'éviter notamment le gel des végétaux plantés dans le mur végétal 2, et en période chaude, de rafraîchir le substrat de plantation SU, et donc d'éviter notamment le dessèchement des végétaux plantés dans le mur végétal 2. Par conséquent, le système de chauffage et de refroidissement 19 permet d'accroître sensiblement la durée d'embellissement procurée par le mur végétal 2 au cours d'une année.

Dans le cadre d'une utilisation du mur végétal 2 pour de l'agriculture verticale, le système de chauffage et de refroidissement 19 permet d'avoir une production plus précoce en maintenant les végétaux plantés dans le mur végétal 2 en situation de « hors gel » au printemps, et une production abondante en été en assurant un rafraîchissant des végétaux plantés dans le mur végétal 2, et également de prolonger la production à l'automne en réchauffant les végétaux plantés dans le mur végétal 2.

De plus, lorsque le mur végétal 2 est positionné contre un mur d'un bâtiment, telle qu'une façade d'un immeuble ou d'une habitation, le système de chauffage et de refroidissement 19 permet également de réchauffer le bâtiment en période froide et de le rafraîchir en période chaude. Ainsi, le mur végétal 2 peut remplacer, ou du moins compléter, les isolations classiques dont peut être pourvu un mur d'un bâtiment.

De façon avantageuse, le système de chauffage et de refroidissement 19 est une pompe à chaleur réversible, telle qu'une pompe à chaleur aérothermique, et comporte donc un circuit de circulation de fluide caloporteur 22 comprenant un échangeur thermique externe 23, un compresseur 24, un ou plusieurs échangeurs thermiques internes 25 couplés thermiquement à la structure de mur 3, c'est-à-dire configurés pour échanger de l'énergie thermique avec la structure de mur 3, et un détendeur 26. De façon avantageuse, le système de chauffage et de refroidissement 19 comporte une unité extérieure 27 située à l'extérieur de la structure de mur 3 et logeant l'échangeur thermique externe 23, le compresseur 24 et le détendeur 26.

L'échangeur thermique externe 23 est plus particulièrement configuré pour former un évaporateur lorsque le système de chauffage et de refroidissement 19 est dans le mode de chauffage, et pour former un condenseur lorsque le système de chauffage et de refroidissement 19 est dans le mode de refroidissement, tandis que le ou chaque échangeur thermique interne 25, qui est couplé thermiquement à la structure de mur 3, est configuré pour former un condenseur lorsque le système de chauffage et de refroidissement 19 est dans le mode de chauffage, et pour former un évaporateur lorsque le système de chauffage et de refroidissement 19 est dans le mode de refroidissement.

Selon le mode de réalisation représenté sur les figures 1 à 5, le circuit de circulation de fluide caloporteur 22 comprend une pluralité d'échangeurs thermiques internes 25 fixés à la première paroi structurelle 4 et couplés thermiquement à différentes parties de la première paroi structurelle 4, et une pluralité d'échangeurs thermiques internes 25 fixés à la deuxième paroi structurelle 5 et couplés thermiquement à différentes parties de la deuxième paroi structurelle 5.

Ainsi, le circuit de circulation de fluide caloporteur 22 comporte une première portion de circuit 22.1 comprenant le détendeur 26, l'échangeur thermique externe 23 et le compresseur 24, et une pluralité de deuxièmes portions de circuit 22.2 reliées fluidiquement à la première portion de circuit et comprenant chacune un échangeur thermique interne 25 respectif.

Chaque échangeur thermique interne 25 fixé à la première paroi structurelle 4 peut par exemple être au moins en partie intégré, c'est-à-dire noyé, dans le béton de ciment formant la première paroi structurelle 4, ou être disposé dans le volume interne 6 et être fixé à la première face interne 4.2 de la première paroi structurelle 4. De façon similaire, chaque échangeur thermique interne 25 fixé à la deuxième paroi structurelle 5 peut par exemple être au moins en partie intégré, c'est-à-dire noyé, dans le béton de ciment formant la deuxième paroi structurelle 5, ou être disposé dans le volume interne 6 et être fixé à la deuxième face interne 5.2 de la deuxième paroi structurelle 5. Lorsqu'un échangeur thermique interne 25 être disposé dans le volume interne 6, il peut par exemple reposer sur une paroi de retenue de substrat 18 respective.

La pluralité d'échangeurs thermiques internes 25 fixés à la première paroi structurelle 4 peut par exemple comporter un échangeur thermique inférieur qui est couplé thermiquement à une partie inférieure de la première paroi structurelle 4, et un échangeur thermique supérieur qui est couplé thermiquement à une partie supérieure de la première paroi structurelle 4, et la pluralité d'échangeurs thermiques internes 25 fixés à la deuxième paroi structurelle 5 peut par exemple comporter un échangeur thermique inférieur qui est couplé thermiquement à une partie inférieure de la deuxième paroi structurelle 5, et un échangeur thermique supérieur qui est couplé thermiquement à une partie supérieure de la deuxième paroi structurelle 5.

La pluralité d'échangeurs thermiques internes 25 fixés à la première paroi structurelle 4 pourrait également comporter au moins un échangeur thermique intermédiaire qui est couplé thermiquement à une partie intermédiaire de la première paroi structurelle 4, située entre les parties inférieure et supérieure de ladite première paroi structurelle 4, et la pluralité d'échangeurs thermiques internes 25 fixés à la deuxième paroi structurelle 5 pourrait également comporter au moins un échangeur thermique intermédiaire qui est couplé thermiquement à une partie intermédiaire de la deuxième paroi structurelle 5, située entre les parties inférieure et supérieure de ladite deuxième paroi structurelle 5.

Selon un mode de réalisation de l'invention, l'unité de commande 21 peut être configurée pour réguler de manière indépendante les températures dans les différentes parties de la structure de mur 3 auxquelles sont couplés thermiquement des échangeurs thermiques internes 25. En d'autres termes, l'unité de commande 21 peut être configurée pour réguler de manière indépendante les températures du fluide caloporteur circulant dans les différents échangeurs thermiques internes 25. Ainsi, par exemple en été, il est possible de réguler en température différemment la partie supérieure de la structure de mur 3 qui se retrouve en plein soleil une grande partie de la journée, et la partie inférieure de la structure de mur 3 qui se retrouve à l'ombre une grande partie de la journée, et ce afin de limiter la consommation électrique du mur végétal 2 selon la présente invention.

De façon avantageuse, le mur végétal 2 comporte au moins un capteur de température (non représenté sur les figures) couplé thermiquement à la partie supérieure de la structure de mur 3 et au moins un capteur de température (non représenté sur les figures) couplé thermiquement à la partie inférieure de la structure de mur 3, et l'unité de commande 21 est configurée pour commander le fonctionnement du système de chauffage et de refroidissement 19 en fonction de la température mesurée par chacun des capteurs de température précités.

Selon un mode de réalisation de l'invention, l'unité de commande 21 pourrait être reliée à un réseau informatique ou à un réseau de télécommunication, et être configurée pour commander le fonctionnement du système de chauffage et de refroidissement 19 également en fonction de données météorologiques obtenues depuis le réseau informatique ou le réseau de télécommunication.

Le mur végétal 2 peut en outre comporter au moins un panneau photovoltaïque, par exemple situé au sommet de la structure de mur 3, et l'unité de commande 21 et le système de chauffage et de refroidissement 19 pourraient être configurés pour être alimentés électriquement au moins en partie avec de l'énergie électrique produite par l'au moins un panneau photovoltaïque. Le panneau photovoltaïque peut par exemple être fixée sur une ombrelle orientable située au-dessus de la structure de mur 3, et dont l'orientation pourrait être contrôler automatiquement en fonction de paramètres mesurés par des capteurs de mesure appartenant au mur végétal 2 et/ou de données météorologiques obtenues.

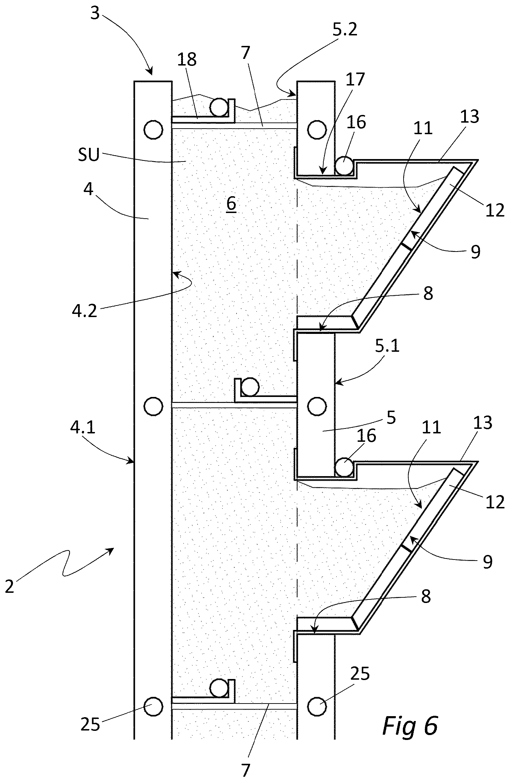

La figure 6 représente un mur végétal 2 selon un deuxième mode de réalisation de l'invention qui diffère du premier mode de réalisation essentiellement en ce que seule l'une des première et deuxième parois structurelles 4, 5, et par exemple la deuxième paroi structurelle 5, est ajourée et est pourvue d'ouvertures de passage 8, et en ce que seule l'une des première et deuxième faces externes 4.1, 5.1, et par exemple seule la deuxième face externe 5.1 est équipée de réceptacles de plantation 9.

Selon un mode de réalisation de l'invention non représenté sur les figures, le mur végétal 2 pourrait comporter un unique échangeur thermique interne 25 couplé thermiquement à la première paroi structurelle 4, et un unique échangeur thermique interne 25 couplé thermiquement à la deuxième paroi structurelle 5.

Selon un autre mode de réalisation de l'invention non représenté sur les figures, le mur végétal 2 pourrait comporter un unique échangeur thermique interne 25 couplé thermiquement à la première paroi structurelle 4 et à la deuxième paroi structurelle 5.

Selon encore un autre mode de réalisation de l'invention non représenté sur les figures, seule l'une des première et deuxième parois structurelles 4, 5 pourrait être couplée thermiquement à un ou plusieurs échangeurs thermiques internes 25.

Selon encore un autre mode de réalisation de l'invention non représenté sur les figures, au moins l'un des échangeurs thermiques internes 25 pourrait s'étendre au moins le long d'une tubulure d'irrigation 16 et reposer sur des organes de support respectifs en étant reçu dans les encoches de retenue 17 respectives.

Bien entendu, la présente invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

## Revendications

1. Mur végétal (2) comprenant :
- une structure de mur (3) délimitant un volume interne (6) configuré pour recevoir un substrat de plantation (SU) dans lequel sont destinés à être plantés des végétaux, la structure de mur (3) comprenant une première face externe (4.1) et une deuxième face externe (5.1) qui sont situées à l'opposé l'une de l'autre, et une pluralité d'ouvertures de passage (8) qui débouchent dans au moins l'une des première et deuxième faces externes (4.1, 5.1) et qui sont configurées pour permettre l'expansion de végétaux, plantés dans le substrat de plantation (SU), hors de la structure de mur (3), et
- un système d'irrigation (14) configuré pour irriguer le substrat de plantation (SU), **caractérisé en ce que** le mur végétal (2) comporte en outre un système de chauffage et de refroidissement (19) configuré pour fonctionner selon au moins un mode de refroidissement dans lequel le système de chauffage et de refroidissement (19) est configuré pour réchauffer la structure de mur (3), et un mode de chauffage dans lequel le système de chauffage et de refroidissement (19) est configuré pour refroidir la structure de mur (3), et une unité de commande (21) configurée pour commander le fonctionnement du système de chauffage et de refroidissement (19) selon le mode de refroidissement ou le mode de chauffage.

2. Mur végétal (2) selon la revendication 1, dans lequel la structure de mur (3) comporte une première paroi structurelle (4) comprenant la première face externe (4.1) et une deuxième paroi structurelle (5) comprenant la deuxième face externe (5.1), les première et deuxième parois structurelles (4, 5) étant espacées l'une de l'autre et délimitant entre elles le volume interne (6) configuré pour recevoir le substrat de plantation (SU), au moins l'une des première et deuxième parois structurelles (4, 5) étant ajourée et comprenant des ouvertures de passage (8) appartenant à ladite pluralité d'ouvertures de passage (8).

3. Mur végétal (2) selon la revendication 2, dans lequel au moins l'une des première et deuxième parois structurelles (4, 5) est en béton de ciment.

4. Mur végétal (2) selon l'une quelconque des revendications 1 à 3, dans lequel le système de chauffage et de refroidissement (19) est une pompe à chaleur réversible.

5. Mur végétal (2) selon l'une quelconque des revendications 1 à 4, dans lequel le système de chauffage et de refroidissement (19) comporte au moins un circuit de circulation de fluide caloporteur (22) comprenant au moins un échangeur thermique interne (25) couplé thermiquement à la structure de mur (3), et configuré pour être traversé par un fluide caloporteur.

6. Mur végétal (2) selon les revendications 2 et 5, dans lequel l'au moins un échangeur thermique interne (25), qui est couplé thermiquement à la structure de mur (3), est fixé à l'une des première et deuxième parois structurelles (4, 5).

7. Mur végétal (2) selon la revendication 5 ou 6, dans lequel le circuit de circulation de fluide caloporteur (22) comporte une pluralité d'échangeurs thermiques internes (25) qui sont couplés thermiquement à différentes parties de la structure de mur (3) et qui sont configurés pour être traversés par un fluide caloporteur.

8. Mur végétal (2) selon la revendication 7, dans lequel la pluralité d'échangeurs thermiques internes (25) comporte au moins un échangeur thermique inférieur qui s'étend dans une partie inférieure de la structure de mur (3) et qui est couplé thermiquement à la partie inférieure de la structure de mur (3), et au moins un échangeur thermique supérieur qui s'étend dans une partie supérieure de la structure de mur (3) et qui est couplé thermiquement à la partie supérieure de la structure de mur (3).

9. Mur végétal (2) selon la revendication 7 ou 8, dans lequel l'unité de commande (21) est configurée pour réguler de manière indépendante les températures dans les différentes parties de la structure de mur (3) auxquelles sont couplés thermiquement des échangeurs thermiques internes (25) appartenant à ladite pluralité d'échangeurs thermiques internes (25).

10. Mur végétal (2) selon l'une quelconque des revendications 1 à 9, dans lequel le système d'irrigation (14) comporte au moins une colonne d'alimentation en eau (15) qui est disposée dans le volume interne (6) délimité par la structure de mur (3), et des tubulures d'irrigation (16) reliées fluidiquement à l'au moins une colonne d'alimentation en eau (15) et configurées pour s'étendre sensiblement horizontalement.

11. Mur végétal (2) selon la revendication 10, dans lequel les tubulures d'irrigation (16) sont disposées à l'extérieur du volume interne (6) délimité par la structure de mur (3).

12. Mur végétal (2) selon la revendication 11, lequel comporte des organes de support fixés à la structure de mur (3) et configurés pour supporter les tubulures d'irrigation (16) et pour positionner les tubulures d'irrigation (16) à distance du substrat de plantation (SU).

13. Mur végétal (2) selon l'une quelconque des revendications 1 à 12, lequel comporte des réceptacles de plantation (9) fixés à la structure de mur (3) et s'étendant le long d'au moins l'une des première et deuxième faces externes (4.1, 5.1) de la structure de mur (3), chaque réceptacle de plantation (9) délimitant une cavité de réception (11) configurée pour recevoir du substrat de plantation (SU), chaque cavité de réception (11) étant ouverte vers le haut et communiquant avec le volume interne (6) délimité par la structure de mur (3) par l'intermédiaire d'au moins une ouverture de passage (8) prévue sur la structure de mur (3).
